# EUROPEAN PATENT APPLICATION

(11) **EP 4 834 467 A1**
(43) Date of publication of application: **04.11.2026**
(21) Application number: 24913195.4
(22) Date of filing: 29.04.2024
(51) Int. Cl.: B01J 19/20, B01J 19/10

(54) **REACTOR CAPABLE OF PERFORMING CONTINUOUS PROCESS AND SILICON-BASED NEGATIVE ELECTRODE MATERIAL MANUFACTURING FACILITY INCLUDING SAME**

(30) Priority: 26.12.2023 KR 20230191002
(71) Applicant: OCI Company Ltd., Seoul 04532 (KR)
(72) Inventor: LEE, Namjin, Seongnam-si Gyeonggi-do 13212 (KR); NOH, Minho, Seongnam-si Gyeonggi-do 13212 (KR); KANG, Seung Yeon, Seongnam-si Gyeonggi-do 13212 (KR); CHANG, Joonhyun, Seongnam-si Gyeonggi-do 13212 (KR); JEONG, Eunhye, Seongnam-si Gyeonggi-do 13212 (KR); CHO, Yongjae, Seongnam-si Gyeonggi-do 13212 (KR); CHI, Eunok, Seongnam-si Gyeonggi-do 13212 (KR)
(74) Representative: Winter, Brandl - Partnerschaft mbB
(86) International application number: PCT/KR2024/005805
(87) International publication number: WO 2025/143380

(57) **Abstract**

The present invention provides a reactor capable of continuous processing. The reactor capable of continuous processing comprises: a reactor body part extending in a horizontal direction, having a reaction space formed therein, and exposed to a heating temperature set from the outside; a reaction gas supply part configured to supply one or a plurality of reaction gases to the reaction space through one end of the reactor body part; a powder supply part connected to a circumference of the reactor body part and configured to supply powder to the reaction space of the reactor body part; a screw part having both ends rotatably supported in the reaction space and configured to be rotated by power provided from the outside to continuously transport, along an axial direction from one side to the other side of the reaction space, the reaction gas and the powder supplied to the reaction space while stirring the reaction gas and the powder to generate a reaction product; a rotation part configured to rotate the screw part; and a discharge part formed at a lower end of the other end side of the reactor body part and configured to discharge the transported reaction product. In addition, the present invention also provides a silicon-based negative electrode material manufacturing facility.

## Description

### [Technical Field]

The present invention relates to a reactor capable of continuous processing and a silicon-based negative electrode material manufacturing facility including the same, and more particularly, to a reactor capable of continuous processing and a silicon-based negative electrode material manufacturing facility including the same, which are capable of achieving mass productivity and post-processing uniformity in the manufacture of a silicon-based negative electrode material.

### [Background Art]

In general, secondary batteries have become an indispensable core in electric devices. In accordance with a trend of pursuing high capacity and weight reduction of secondary batteries, existing secondary battery technologies can no longer satisfy rapidly increasing demands such as extension of a driving range of electric vehicles and weight reduction of intelligent wearable devices. A core of the above problem lies in a practical problem of low energy density of existing secondary batteries.

Currently, graphite-based negative electrode materials are most widely used as negative electrode materials for secondary batteries, and have a theoretical capacity per gram of only 372 mAh/g. Existing technologies are very close to the theoretical capacity per gram, and thus development of a negative electrode material having a higher capacity per gram is urgent. Silicon negative electrode materials have been widely studied because a capacity per gram thereof (theoretical capacity per gram of 4200 mAh/g) is very high.

In addition, silicon negative electrode materials are considered as next-generation negative electrode materials due to advantages such as low lithium deintercalation possibility and abundant raw material sources.

Materials handled in a process of manufacturing such silicon-based negative electrode materials all have a powder form. Since such powder has a very small particle size (<10 µm) and a high specific surface area (>900 m²/g), it is difficult to handle and thus is produced by a batch method.

Accordingly, problems occur in that mass productivity and post-processing uniformity are low, and yield is inevitably reduced in the course of passing through multiple batch processes.

When a silicon-based negative electrode material is manufactured through a batch process, the following problems may occur.

First, mass productivity may be reduced. Since the batch method is a method in which powder must be processed one by one, productivity is lower than that of a continuous process. In particular, in a process of manufacturing a silicon-based negative electrode material, since particles are very small and have a high specific surface area, their handling is difficult, so that the reduction in productivity of the batch process is more serious.

Second, post-processing uniformity may be reduced. Since the batch method processes powder one by one, uniformity of a post-processing process may be reduced. In particular, since a post-processing process of the silicon-based negative electrode material manufacturing process is very complex and demanding, and in the batch process, such a process must be performed one by one manually by an operator, it is difficult to secure uniform quality.

Third, yield may be reduced. In the batch method, reduction in yield inevitably occurs in the course of passing through multiple processes. In particular, in a process of manufacturing a silicon-based negative electrode material, since particles are very small and have a high specific surface area, their handling is difficult, so that the reduction in yield is more serious.

For these reasons, in recent years, in order to solve the conventional problems, there is a need for development of a technology capable of converting the silicon-based negative electrode material manufacturing process into a continuous process and automating the post-processing process to improve productivity while also improving uniformity of the post-processing process.

### [Disclosure]

### [Technical Problem]

The present invention has been devised to solve the above-described problems, and an object of the present invention is as follows.

An object of the present invention is to provide a reactor capable of continuous processing and a silicon-based negative electrode material manufacturing facility including the same, which are capable of continuously processing a porous carbon structure,nano-sized silicon particle CVD/CVI, and a carbon deposition process for a silicon oxidation prevention layer and imparting uniformity of a post-processing process, by applying a configuration in which flow of powder and gas is induced by a rotating screw part in a process of manufacturing a silicon-based negative electrode material and, at the same time, a plurality of baffles are formed at predetermined positions of screw blades formed on a rotation shaft of the screw part, thereby uniformly moving the powder while preventing the powder from adhering to the screw blades.

The objects of the present disclosure are not limited to the above-mentioned object, and other objects and advantages of the present disclosure that are not mentioned can be understood by the following description, and will be more clearly understood by the embodiments of the present disclosure. In addition, it will be easily understood that the objects and advantages of the present disclosure can be realized by means indicated in the claims and combinations thereof.

### [Technical Solution]

In order to achieve the above objects, the present invention provides a reactor capable of continuous processing.

The reactor capable of continuous processing comprises: a reactor body part extending in a horizontal direction, having a reaction space formed therein, and exposed to a heating temperature set from the outside; a reaction gas supply part configured to supply one or a plurality of reaction gases to the reaction space through one end of the reactor body part; a powder supply part connected to a circumference of the reactor body part and configured to supply powder to the reaction space of the reactor body part; a screw part having both ends rotatably supported in the reaction space and configured to be rotated by power provided from the outside to continuously transport, along an axial direction from one side to the other side of the reaction space, the reaction gas and the powder supplied to the reaction space while stirring the reaction gas and the powder to generate a reaction product; a rotation part configured to rotate the screw part; and a discharge part formed at a lower end of the other end side of the reactor body part and configured to discharge the transported reaction product.

Here, preferably, at a plurality of positions of the reactor body part,
a plurality of auxiliary gas supply parts configured to supply an auxiliary gas to the reaction space are formed at intervals,
wherein the plurality of auxiliary gas supply parts
are connected to the reaction gas supply part through an auxiliary gas supply flow path.

In addition, preferably, the screw part comprises:
a rotation shaft having both ends rotatably supported inside the reactor body part, and
screw blades formed to have a screw shape around the rotation shaft, and
the rotation part comprises a rotation motor axially connected to the rotation shaft and configured to rotate the rotation shaft to achieve a set rotation speed under control of a control part.

In addition, preferably, on outer surfaces of the screw blades,
one or a plurality of baffles having a predetermined shape are formed to protrude.

In addition, the baffles
are preferably formed on at least one side surface of the screw blades.

In addition, preferably, at a plurality of positions on a circumference of the reactor body part,
an ultrasonic generator is installed,
wherein the ultrasonic generator is configured to transmit ultrasonic waves at a level set under control of a control part into an inside of the reactor body part through the circumference of the reactor body part.

In addition, preferably, a waste gas discharge part configured to discharge a waste gas remaining in the reaction space to the outside
is connected to a circumference of the other end side of the reactor body part.

According to another embodiment, the present invention may provide a silicon-based negative electrode material manufacturing facility comprising a structure in which a plurality of the above-described reactors capable of continuous processing are sequentially connected.

### [Advantageous Effects]

Through the above-described means for solving the problems, the present invention has an effect of being capable of continuously processing a porous carbon structure, nano-sized silicon particle CVD/CVI, and a carbon deposition process for a silicon oxidation prevention layer and imparting uniformity of a post-processing process, by applying a configuration in which flow of powder and gas is induced by a rotating screw part in a process of manufacturing a silicon-based negative electrode material and, at the same time, a plurality of baffles are formed at predetermined positions of screw blades formed on a rotation shaft of the screw part, thereby uniformly moving the powder while preventing the powder from adhering to the screw blades.

In addition to the above-described effects, the specific effects of the present disclosure will be described together with the specific matters for implementing the disclosure below.

### [Brief Description of Drawings]

FIG. 1 is a perspective view showing an example of a configuration of a reactor capable of continuous processing according to the present invention.
FIG. 2 is a view showing a schematic configuration of the reactor of FIG. 1.
FIG. 3 is a perspective view showing a configuration of a screw part according to the present invention.
FIG. 4 shows perspective views of baffles according to the present invention.
FIG. 5 is a front view showing a screw part in which one baffle is installed according to the present invention.
FIG. 6 is a front view showing a screw part in which another baffle is installed according to the present invention.
FIG. 7 is a perspective view showing another example of a configuration of a reactor capable of continuous processing according to the present invention.
FIG. 8 is a view showing a schematic configuration of the reactor of FIG. 7.
FIG. 9 is a view showing a process flow in a silicon-based negative electrode material manufacturing facility including a reactor capable of continuous processing according to the present invention.

### [Best Modes of the Invention]

Hereinafter, embodiments of the present invention will be described in detail with reference to the drawings so that those skilled in the art to which the present invention pertains can easily carry out the present invention.

The present invention may be embodied in a variety of forms and is not limited to the embodiments described herein.

In order to clearly describe the present invention, parts irrelevant to the description are omitted, and throughout the specification, same or similar components will be referred to as like reference numerals.

When any component is provided or disposed "on (or under)" a substrate or "above (or below)" a substrate below, this means that any component is provided or disposed in contact with an upper surface (or a lower surface) of the substrate.

Further, this is not limited to not including any other component between the substrate and any component provided or disposed on (or under) the substrate.

Next, a reactor capable of continuous processing according to the present invention and a silicon-based negative electrode material manufacturing facility including the same will be described with reference to the accompanying drawings.

First, the reactor capable of continuous processing according to the present invention will be described.

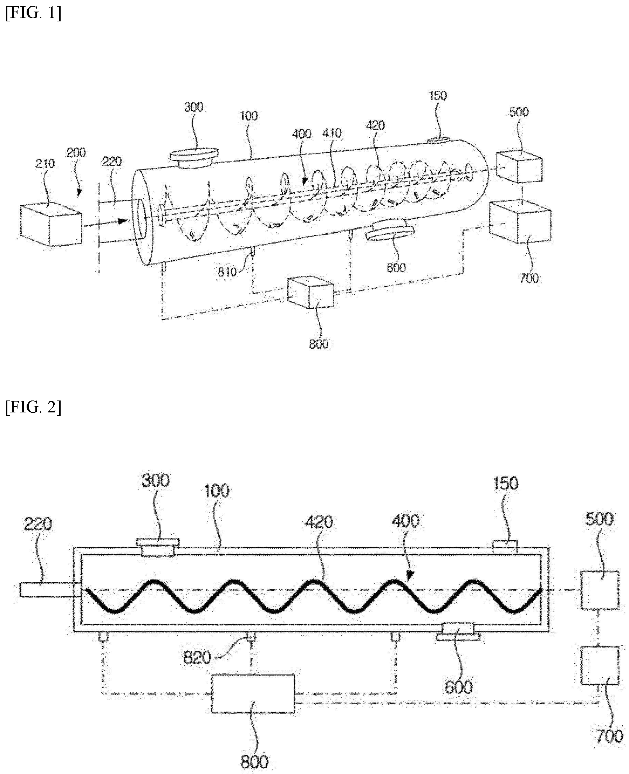

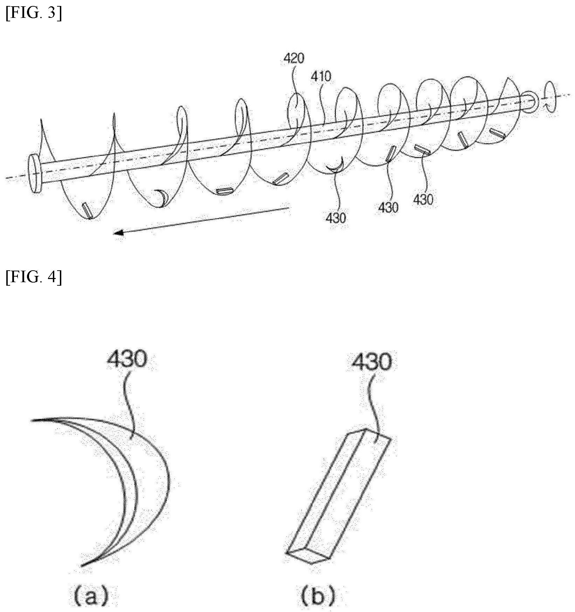

FIG. 1 is a perspective view showing an example of a configuration of a reactor capable of continuous processing according to the present invention. FIG. 2 is a view showing a schematic configuration of the reactor of FIG. 1. FIG. 3 is a perspective view showing a configuration of a screw part according to the present invention.

Referring to FIGS. 1 to 3, a reactor capable of continuous processing according to the present invention includes a reactor body part 100, a reaction gas supply part 200, a powder supply part 300, a screw part 400, a rotation part 500, and a discharge part 600.

The reactor body part 100 may be formed in a tubular shape in which a reaction space is formed therein. The reactor body part 100 may be exposed to a heating temperature set from the outside through a separate heating device. The reactor body part 100 according to the present invention may be disposed along a horizontal direction.

The reaction gas supply part 200 is connected to one end of the reactor body part 100 to supply a corresponding reaction gas to the reaction space. The reaction gas supply part 200 has a reaction gas supply pipe 210 and a reaction gas supplier 220. The reaction gas supply pipe 210 is connected in communication with one end of the reactor body part 100. The reaction gas supplier 220 supplies the reaction gas through the reaction gas supply pipe 210.

The powder supply part 300 is formed as a powder supply pipe. The powder supply pipe is connected to a predetermined position on an outer circumference of one end side of the reactor body part 100 to supply powder supplied from the outside to the reaction space.

The screw part 400 according to the present invention has both ends rotatably supported in the reaction space, and may be rotated by power provided from the outside to continuously transport, along an axial direction from one side to the other side of the reaction space, the reaction gas and the powder supplied to the reaction space while stirring the reaction gas and the powder to generate a reaction product.

The screw part 400 has a rotation shaft 410 having both ends rotatably supported at centers of both sides of the reaction space, and screw blades 420 formed on the rotation shaft 410 in a helical shape or a screw shape along a longitudinal direction of the rotation shaft.

An interval between the screw blades 420 may be different depending on a process.

The rotation part 500 according to the present invention includes a rotation motor. The rotation motor is axially connected to one end of the rotation shaft 410 and may rotate the rotation shaft 410 to achieve a rotation speed set under control of a control part 700.

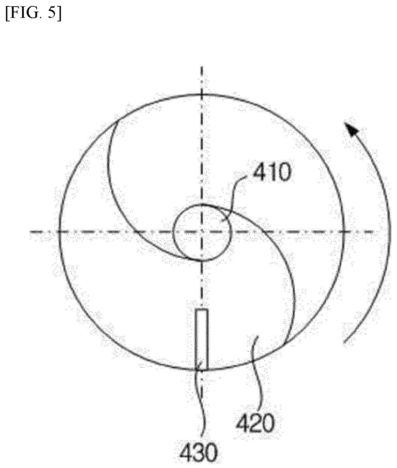

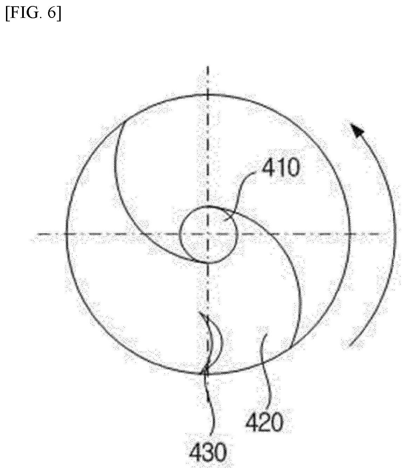

FIG. 4 shows perspective views of baffles according to the present invention. FIG. 5 is a front view showing a screw part in which one baffle is installed according to the present invention. FIG. 6 is a front view showing a screw part in which another baffle is installed according to the present invention.

Referring to FIGS. 4 to 6, on outer surfaces of the screw blades 420 according to the present invention, one or a plurality of baffles 430 having a predetermined shape are formed to protrude.

The baffles 430 according to the present invention may be formed on at least one side surface of the screw blades 410. For example, the baffles 430 may be formed on any one of a front surface or a rear surface of each of the screw blades 410. Preferably, the baffles 430 may be formed on both surfaces, that is, both the front surface and the rear surface of each of the screw blades 410.

The baffles 430 may be formed as protrusions having a semicircular shape, a square shape, a rectangular shape, or a polygonal shape. In addition, the baffles 430 may be formed integrally on outer surfaces of each of the screw blades 420. The baffles 430 may be installed such that installation positions thereof are in contact with tips of the screw blades 420.

Further, one or more baffles 430 may be installed on the outer surface of each of the screw blades 420 so as to face different directions at different positions.

In addition, the discharge part 600 according to the present invention is formed as a discharge pipe. The discharge pipe is formed at a lower end of the other end side of the reactor body part 100 and may discharge the transported reaction product.

Further, ultrasonic generators 800 may be installed at a plurality of positions on a circumference of the reactor body part 100.

The ultrasonic generator 800 may transmit ultrasonic waves at a level set under control of a control part 700 into an inside of the reactor body part 100 through the circumference of the reactor body part 100 using ultrasonic generation modules 810.

In addition, a waste gas discharge part 150 configured to discharge a waste gas remaining in the reaction space to the outside may be connected to the circumference of the other end side of the reactor body part 100. The waste gas discharge part 150 may be formed as a waste gas discharge pipe.

In addition, the reactor according to the present invention as described above may uniformly stir powder having a very small particle size (<10 µm) and a high specific surface area (>900 m²/g), which is used in a process of manufacturing a negative electrode material, while continuously transporting the powder. This may be achieved through rotational driving of the above-described screw part 400.

In particular, the reactor according to the present invention is characterized in that it includes the screw part 400 having rotating screw blades 420, and that baffles 430, which are in contact with the powder transported while being stirred, are formed on the screw blades 420.

That is, at least one baffle 430 having a predetermined shape is formed on an outer surface of each of the screw blades 420 at a portion in contact with the powder, so that, while the powder is transported by the rotating screw part 400, the powder may be uniformly stirred to induce a uniform reaction between the reaction gas and the powder.

Meanwhile, a reaction time in the reaction space of the reactor according to the present invention may be variably set by the control part 700 according to a pitch interval of the rotating screw blades 420 and revolutions per unit time of the rotation shaft 410 of the screw part 400.

In addition, flow of powder in the reaction space of the reactor may proceed in a horizontal direction. Accordingly, the powder may be deposited on a lower wall of the reaction space to form a layer; however, in the present invention, by installing ultrasonic generators 800 at a plurality of positions on a lower outer circumference of the reactor and continuously transmitting ultrasonic waves through a lower end of the reactor, a problem in which the powder is deposited may be solved.

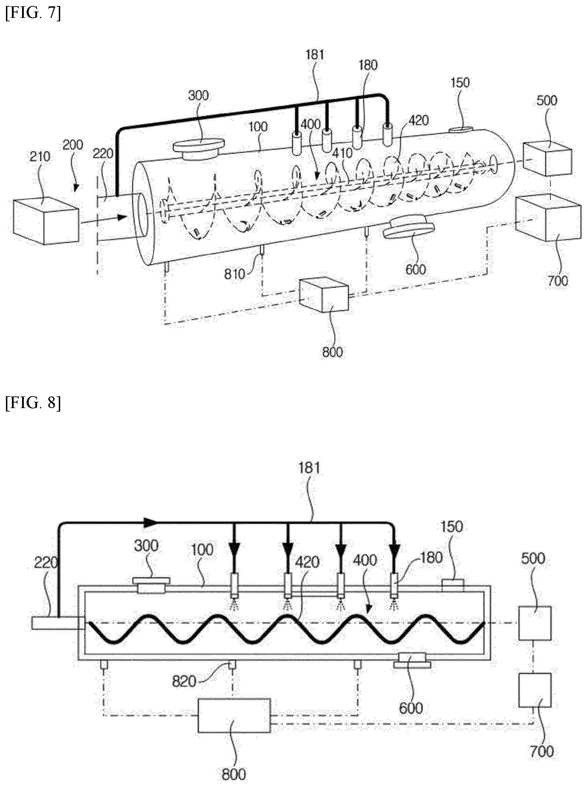

FIG. 7 is a perspective view showing another example of a configuration of a reactor capable of continuous processing according to the present invention. FIG. 8 is a view showing a schematic configuration of the reactor of FIG. 7.

FIGS. 7 and 8 show another example of a reactor according to the present invention.

The reactor may be substantially the same as the configuration of the reactor described with reference to FIGS. 1 to 6. However, at a plurality of positions of the reactor body part 100, a plurality of auxiliary gas supply parts 180 configured to supply an auxiliary gas to the reaction space may be formed at intervals.

The plurality of auxiliary gas supply parts 180 may be connected to the reaction gas supply part 200 through an auxiliary gas supply flow path.

Here, the auxiliary gas supply parts 180 may be injectors configured to inject and supply the reaction gas supplied through an auxiliary gas supply flow path 181 to different positions of the reaction space of the reactor.

In addition, the auxiliary gas supply parts 180 may be formed along a circumference of the reactor body part 100, and may be formed side by side along a longitudinal direction of the reactor body part 100, or may be formed at different positions along a path forming a vortex shape.

Thereby, the reaction gas may be simultaneously supplied to one end of the reactor and to a plurality of positions along a movement path of the powder, so that a reaction between the reaction gas and the powder can be performed more efficiently.

### [Modes for Carrying Out the Invention]

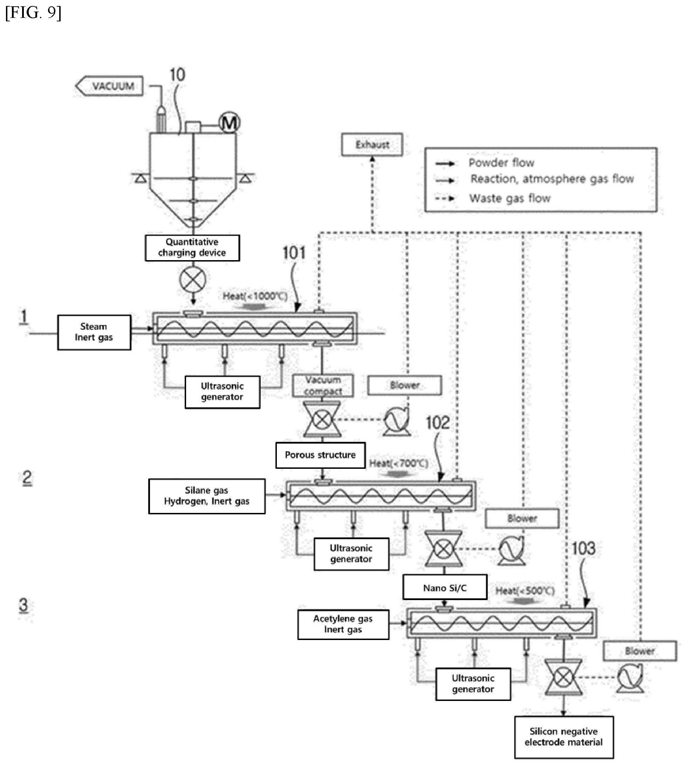

FIG. 9 is a view showing a process flow in a silicon-based negative electrode material manufacturing facility including a reactor capable of continuous processing according to the present invention.

Referring to FIG. 9, a silicon-based negative electrode material manufacturing facility includes: a storage tank 10, a first process part 1, a second process part 2, and a third process part 3.

The storage tank 10 stores a spherical carbon structure to be processed.

The storage tank 10 may include a device configured to control the carbon structure to be quantitatively charged into an inside of a first reactor 101 of the first process part 1 in a predetermined volume, weight, or the like, and an agitator capable of suppressing formation of a bridge during input.

The reactor according to the present invention may be applied to first, second, and third reactors 101, 102, and 103 to be described later.

### First Process Part 1

The first process part 1 according to the present invention may include a first reactor 101. The first reactor 101 is a steam activation reactor.

The first reactor 101 increases a specific surface area of the charged spherical carbon structure to 300 to 2000 m²/g. The first reactor 101 is operated at less than 1200°C, and a set amount of steam is continuously introduced into a reaction space of the first reactor 101.

In this process, the spherical carbon structure reacts with the steam, thereby increasing the specific surface area to form a "porous carbon structure." After the reaction, gas (CO₂, etc.) is discharged through a waste gas discharge part, and the porous carbon structure is discharged downward through a discharge part by gravity.

### Second Process Part 2

The second process part 2 according to the present invention may include a second reactor 102. The second reactor 102 is an Si CVD (Chemical vapor deposition) reactor.

The second reactor 102 deposits/impregnates Si onto/into the porous carbon structure.

Here, an operating temperature is set to 300 to 700°C, and reaction gases (silane, hydrogen, inert gas) may be introduced sequentially or simultaneously according to a purpose. Through this reaction, an Si/C composite is produced.

In this case, auxiliary gas supply parts 180 may alternately or additionally introduce auxiliary gases into the reaction space of the second reactor 102. Thereby, a concentration of gas may be varied according to each position in the reaction space of the second reactor 102, and thus a single/multiple layer may be controlled.

### Third Process Part 3

The third process part 3 according to the present invention may include a third reactor 103. The third reactor 103 is a carbon CVDreactor.

The third reactor 103 may form a passivation layer with carbon in order to prevent oxidation/side reactions of the Si/C composite.

Here, the third reactor 103 is operated at 300 to 600°C, and reaction gases (gas including a carbon source, hydrogen, inert gas) may be introduced sequentially or simultaneously to comply with a set purpose.

In the present invention, by applying the reactor using the screw part to the first, second, and third process parts as described above, three stages of post-processing processes can be continuously performed, thereby exhibiting an advantage capable of improving mass productivity and minimizing material loss by deleting unnecessary movement between processes so as to be distinguished from a conventional batch post-processing method.

In addition, in the present invention, since a movement position of powder or a material may be periodically changed through baffles formed on outer surfaces of each of the screw blades, there is an advantage capable of improving post-processing uniformity.

In addition, by generating ultrasonic waves at a plurality of positions on the bottom of each of the first, second, and third reactors, a problem in which powder or a material is adhered to and lost on the bottom of the reaction space of each reactor can be solved.

The present invention is not limited to the above-described specific preferred embodiments, and of course, various modifications may be implemented by those skilled in the art to which the present invention pertains without departing from the gist of the present invention as claimed in the claims, wherein such modifications fall within the scope of the claims.

### [Description of Reference Numerals]

100: Reactor body part
150: Waste gas discharge part
180: Auxiliary gas supply part
181: Auxiliary gas supply flow path
200: Reaction gas supply part
210: Reaction gas supply pipe
220: Reaction gas supplier
300: Powder supply part
400: Screw part
410: Rotation shaft
420: Screw blade
500: Rotation part
600: Discharge part
700: Control part
800: Ultrasonic generator
810: Ultrasonic generation module

## Claims

1. A reactor capable of continuous processing, comprising:
a reactor body part extending in a horizontal direction, having a reaction space formed therein, and exposed to a heating temperature set from the outside;
a reaction gas supply part configured to supply one or a plurality of reaction gases to the reaction space through one end of the reactor body part;
a powder supply part connected to a circumference of the reactor body part and configured to supply powder to the reaction space of the reactor body part;
a screw part having both ends rotatably supported in the reaction space and configured to be rotated by power provided from the outside to continuously transport, along an axial direction from one side to the other side of the reaction space, the reaction gas and the powder supplied to the reaction space while stirring the reaction gas and the powder to generate a reaction product;
a rotation part configured to rotate the screw part; and
a discharge part formed at a lower end of the other end side of the reactor body part and configured to discharge the transported reaction product.

2. The reactor of claim 1, wherein at a plurality of positions of the reactor body part, a plurality of auxiliary gas supply parts configured to supply an auxiliary gas to the reaction space are formed at intervals,
wherein the plurality of auxiliary gas supply parts are connected to the reaction gas supply part through an auxiliary gas supply flow path.

3. The reactor of claim 1, wherein the screw part comprises a rotation shaft having both ends rotatably supported inside the reactor body part, and screw blades formed to have a screw shape around the rotation shaft, and
the rotation part comprises a rotation motor axially connected to the rotation shaft and configured to rotate the rotation shaft to achieve a set rotation speed under control of a control part.

4. The reactor of claim 3, wherein on outer surfaces of the screw blades, one or a plurality of baffles having a predetermined shape are formed to protrude.

5. The reactor of claim 4, wherein the baffles are formed on at least one side surface of the screw blades.

6. The reactor of claim 1, wherein at a plurality of positions on a circumference of the reactor body part, an ultrasonic generator is installed,
wherein the ultrasonic generator is configured to transmit ultrasonic waves at a level set under control of a control part into an inside of the reactor body part through the circumference of the reactor body part.

7. The reactor of claim 1, wherein a waste gas discharge part configured to discharge a waste gas remaining in the reaction space to the outside is connected to a circumference of the other end side of the reactor body part.

8. A silicon-based negative electrode material manufacturing facility, comprising a structure in which a plurality of reactors capable of continuous processing according to any one of claims 1 to 7 are sequentially connected.
